(19) **Europäisches Patentamt European Patent Office Office européen des brevets**

(11) **EP 4 564 205 A1**

(12) # EUROPEAN PATENT APPLICATION

(43) Date of publication:
04.06.2025 Bulletin 2025/23

(51) International Patent Classification (IPC):
*G06F 21/51* (2013.01)   *H04L 9/32* (2006.01)
*H04L 9/00* (2022.01)   *H04L 9/08* (2006.01)

(21) Application number: 24216022.4

(22) Date of filing: 28.11.2024

(52) Cooperative Patent Classification (CPC):
**G06F 21/51; H04L 9/3239;** G06F 2221/033;
H04L 9/0897; H04L 9/3297; H04L 9/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 01.12.2023 FI 20236328

(71) Applicant: Nokia Solutions and Networks Oy
02610 Espoo (FI)

(72) Inventors:
• FAISAL, Tooba
  Orsay (FR)
• VAN EWIJK, Adrianus
  EKEREN (BE)
• OLIVER, Ian Justin
  Söderkulla (FI)
• JATKOLA, Kaisa Johanna
  Helsinki (FI)

(74) Representative: Nokia EPO representatives
Nokia Technologies Oy
Karakaari 7
02610 Espoo (FI)

(54) **WEB3-BASED SOFTWARE DOWNLOAD AND INTEGRITY ASSURANCE IN REMOTE DEVICES**

(57) According to an aspect, there is provided an apparatus for performing the following. The apparatus retrieves a resource usage monitoring algorithm from an edge cloud or a central cloud. The apparatus calculates a first cryptographic hash based on the resource usage monitoring algorithm and stores the first cryptographic hash to a trusted register. The apparatus transmits the first cryptographic hash to the edge cloud or the central cloud.

Fig. 2

EP 4 564 205 A1

## Description

TECHNICAL FIELD

Various example embodiments relate to wireless communications.

BACKGROUND

Web3 (equally called web 3.0) is a concept of a decentralized and user-centric Internet which is built on the principles of blockchain technology and distributed systems. Thus, in the Web3 environment, devices (being, e.g., Internet of Things, IoT, devices) acting as resources may be spread across the globe. In a service-based environment, when devices are provisioned as services, it is important to monitor the operation of the devices to keep track of, e.g., charging, resource usage and quality of service (QoS) of the devices. However, such monitoring is challenging in a Web3 environment where the IoT devices are deployed in a plurality of different remote locations. In a Web3 environment, there also exist significant dangers relating to software and hardware tampering and devices using unauthorised software versions as the access to the devices cannot be controlled as closely as in the case of non-distributed systems. These factors may also makes it more difficult for the service provider to monitor the device.

SUMMARY

According to an aspect, there is provided the subject matter of the independent claims. Embodiments are defined in the dependent claims.
One or more examples of implementations are set forth in more detail in the accompanying drawings and the description below. Other features will be apparent from the description and drawings, and from the claims.

BRIEF DESCRIPTION OF THE DRAWINGS

Figure 1 illustrates a system to which some embodiments may be applied;
Figure 2 illustrates a system according to some embodiments;
Figures 3 to 6 illustrate signalling according to some embodiments; and
Figure 7 illustrates an apparatus according to some embodiments.

DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. Single features of different embodiments and/or examples may also be combined to provide other embodiments and/or examples.
As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.
As used here, the term "vendor" may be defined as an entity (e.g., a company) which produces a piece of hardware (e.g., a device) or a piece of software (e.g., a software application). The vendor may be, in some cases, the owner of the device or software application when the device or software application is leased by the vendor directly.
In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (Wi-MAX), Bluetooth®, personal communications services (PCS), ZigBee®, wideband code division multiple access (WCDMA), systems using ultra-wideband (UWB) technology, sensor networks, mobile adhoc networks (MANETs) and Internet Protocol multimedia subsystems (IMS) or any combination thereof.

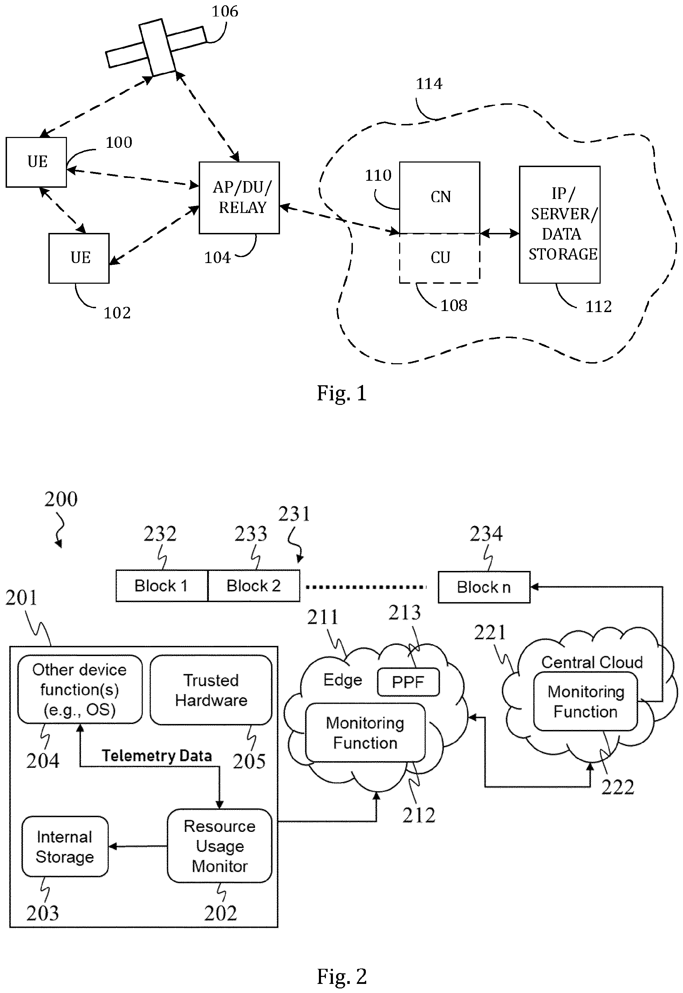

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.
The embodiments are not, however, restricted to the system given as an example but a person skilled in the art may apply the solution to other communication systems provided with necessary properties.
The example of Figure 1 shows a part of an exemplifying radio access network.
A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station. The user equipment may comprise a mobile equipment and at least one universal integrated circuit card (UICC).

The user device typically refers to a portable computing device that includes wireless mobile communication devices operating with or without a subscriber identification module (SIM) or UICC, including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction. Thus, the user devices may not enable direct user interaction or may enable only limited user interaction (e.g., during setup). The user device (or in some embodiments a layer 3 relay node) is configured to perform one or more of user equipment functionalities. The user device may also be called a terminal device, a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements con-trolling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

It should be understood that, in Figure 1, user devices are depicted to include 2 antennas only for the sake of clarity. The number of reception and/or transmission antennas may naturally vary according to a current implementation.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications, including vehicular safety, different sensors and real-time control. 5G is expected to have multiple radio interfaces, namely below 6GHz, cmWave and mmWave, and also being integradable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual subnetworks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into the RAN by utilizing network function virtualization (NVF) and software defined networking (SDN). Using edge cloud may mean access node operations to be carried out, at least partly, in a server, host or node operationally coupled to a remote radio head or unit (RU) or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a central or centralized unit, CU 108). Thus, in summary, the RAN may comprise at least one distributed access node comprising a central unit, one or more distributed units communicatively connected to the central unit and one or more (remote) radio heads or units, each of which is communicatively connected to at least one of the one or more distributed units.

It should also be understood that the distribution of labor between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future rail-way/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

6G architecture is targeted to enable easy integration of everything, such as a network of networks, joint communication and sensing, non-terrestrial networks and terrestrial communication. 6G systems are envisioned to encompass machine learning algorithms as well as local and distributed computing capabilities, where virtualized network functions can be distributed over core and edge computing resources. Far edge computing, where computing resources are pushed to the very edge of the network, will be part of the distributed computing environment, for example in "zero-delay" scenarios. 5G systems may also employ such capabilities. More generally, the actual (radio) communication system is envisaged to be comprised of one or more computer programs executed within a programmable infrastructure, such as general-purpose computing entities (servers, processors, and like).

The embodiments to be discussed below may be directed to apparatuses and processes carried out in a Web3 (equally called web 3.0) environment. Web3 is a concept of a decentralized and user-centric Internet which is built on the principles of blockchain technology and distributed systems. Thus, in the Web3 environment, devices (being, e.g., Internet of Things, IoT, devices such as drones) acting as resources may be spread across the globe. Decentralization and Web3 enables companies to work together and create solutions together in a much more agile and dynamic way. Web3 decentralization is used in this new model to enable companies to collaborate in a trustless way (i.e., trust must be established through different Web3 technologies).

In a service-based environment, when devices are provisioned as services, it is important to monitor the operation of the devices to keep track of, e.g., charging, resource usage and quality of service (QoS) of the devices. However, such monitoring is challenging in a Web3 environment where the devices are deployed in a plurality of different remote locations (e.g., for improving service availability) and where different parties or stakeholders (e.g., hardware and/or software vendors) are working together in an adhoc and trustless way (for example, using an adhoc agreement, e.g., through cryptonetworks such as blockchains and smart contracts arranged through these crypto networks). In order to be able operate in said trustless way, a separate mechanism is needed for establishing trust between parties.

In a Web3 environment, there also exist significant dangers relating to software and hardware tampering and devices using unauthorised software versions as the access to the devices cannot be controlled as closely as in the case of non-distributed systems. These factors may also make it more difficult for the service provider to monitor the (IoT) device.

Moreover, one problem with current centralized and highly-customized solutions is that both a tight integration and testing are needed to build multi-stakeholder end-to-end solutions. These solutions are challenging to build and test, requiring integration projects that are both costly and time-consuming.

The embodiments to be discussed seek to alleviate or overcome at least some of the problems described above.

Figure 2 illustrates an architecture of a distributed monitoring system 200 according to embodiments. Figure 2 illustrates a simplified system architecture only showing some elements and functional entities. It is apparent to a person skilled in the art that the system may also comprise other functions and structures.

The distributed monitoring system 200 corresponds to a decentralized (e.g., web3) environment. The distributed monitoring system 200 of Figure 2 comprises a device 201, an edge cloud 211 (equally called an edge platform) connected to the device 201, a central cloud 221 connected to the edge cloud and a blockchain 231 (or other distributed ledger) managed by the central cloud 221. The device 201 and the edge cloud 211 may be connected to each other directly (via a wired or wireless communication link) or via one or more other devices (e.g., gateway devices) or systems and/or via one or more networks (e.g., 5G private network). The edge cloud 211 and the central cloud 221 may be connected to each other directly or via one or more other devices or systems. The device 201 is connected to the central cloud 221 at least via the edge cloud 211 though other (more direct) connection options may also exist in some embodiments. The distributed monitoring system 200 may have been setup for monitoring of a particular space or environment (e.g., a factory floor).

The distributed monitoring system 200 may be assumed to correspond to a decentralized trustless environment. In other words, the device 201 and the edge cloud 211 do not, by default, trust each other. The trust between the device 201 and the edge cloud 211 in the system 200 is established through the processes according to embodiments, that is, through the elements 202, 212, 222 of Figure 2, as well as by providing certain trusted hardware 205 in the device 201.

To provide an example of such a trustless environment where a separate mechanism needs to be provided for establishing trust between entities, the distributed monitoring system 200 may be a multi-stakeholder environment. In such an environment, the hardware and/or software of the device 201, the edge cloud 211 and/or the central cloud 221 may be provided by a plurality of different vendors. For example, the hardware of the device 201 may be provided by a first vendor while different software of the device 201 may be provided by one or more different second vendors. Each of these vendors may want to get guarantees that their part of the system 200 functions according to certain (quality or QoS) expectations. Also, a purchaser and end-user of the end-to-end application may want to have the right quality monitoring and renumeration in place.

The distributed monitoring system 200 may be configured according to embodiments so that monitoring of resource usage of the device 201 in a trustworthy manner is enabled. There are two main motivators for the resource usage monitoring in the system 200: 1) accounting - resources (e.g., different hardware and/or software) for providing a given service are likely to be provided by several vendors and keeping track of usage of each resource is required, and 2) accountability - if there is service quality degradation, the responsible resource (e.g., a faulty hardware or a software with a bug) should be identified.

The device 201 may be an IoT device. The device 201 may be a vehicular or mobile IoT device or a computing device for a vehicular or mobile IoT device. To give examples of these types of devices, the device 201 may be a robot, a cobot (i.e., a collaborative robot) or an indoor or outdoor drone (e.g., in a factory) or a computing device for such a robot, cobot or drone. A drone may be equally called an unmanned aerial vehicle (UAV). The device 201 may be equipped with one or more sensors (e.g., a camera, a microphone, a temperature sensor, an antenna or a chemical sensor) for sensing its environment. The device 201 may be a device enabling no direct user interaction or only limited user interaction (e.g., many robots or drones) or a device enabling user interaction (e.g., a cobot). In some embodiments, the device 201 may be a mobile resource-limited devices, that is, the device 201 may be capable of movement (i.e., changing its location) and/or may have limited computational resources and/or limited memory. The device 201 may be any of devices 101, 102 of Figure 1.

The device 201 comprises a resource usage monitoring (RUM) algorithm (i.e., software) 202. The RUM algorithm 202 may have been provided by a device manufacturer, a software developer, or a provider of the edge cloud 211. The RUM algorithm 202 is configured to collect or measure telemetry data regarding the operation of the device 201, that is, regarding the resource usage of various resources (or equally device functions) of the device 201. The measurements may relate, e.g., to usage time (or running time) of a resource or a battery level of a hardware resource comprising a battery. The monitored resources may comprise one or more software resources (i.e., software applications run by the device 201 which may be associated with one or more different vendors) and/or one or more hardware resources (e.g., hardware modules or chips). The software resource(s) may comprise, for example, Basic Input/Output System (BIOS) and/or an operating system (OS) of the device 201. The RUM algorithm 202 may be configured to monitor at least usage time for one or more resources. The RUM algorithm 202 may also monitor total resource usage by, for example, monitoring the current time, active time (or active counter) defining when the device 201 is switched on/powered on and idle time (or idle counter) defining when the device 201 is inactive (i.e., is performing no computations relating to any of the resources 204 other than resource usage algorithm 202). Alternative to the active and idle times, the device 201 may monitor start times defining time instances when the device 201 is switched on/powered on and end times defining time instances when the device 201 is switched off/powered off. Additionally or alternative, the RUM algorithm 202 may be configured to monitor, per resource, at least active time defining when the resource is active, the current time and idle time defining when the resource is inactive. Thus, both overall resource usage of the device and/or device-function-specific resource usage(s) of the device 201 may be monitored. The operation of the RUM algorithm is described in further detail in connection with following Figures.

The device 201 comprises an internal storage 203 comprising, e.g., at least one memory. The RUM algorithm 202 may be configured to store results of measurements to the internal storage 203. The RUM algorithm itself may be stored in the internal storage 203.

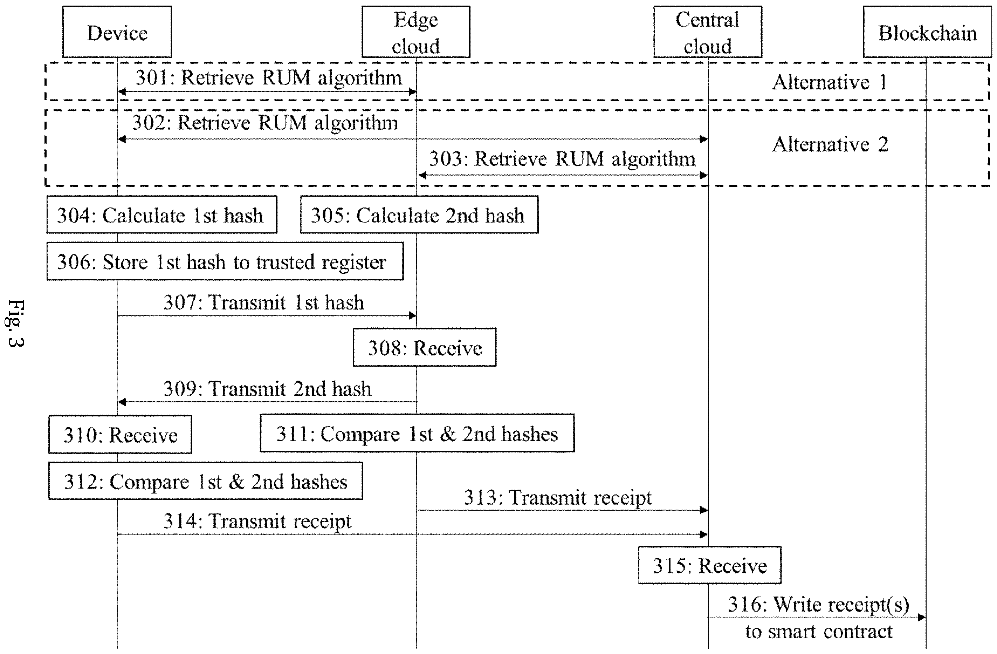

The device 201 further comprises trusted hardware 205. The trusted hardware 205 may comprise a trusted processor comprising a trusted (processor) register. The trusted register may be used for storing a cryptographic hash of the RUM algorithm 202. This cryptographic hash may be subsequently used for establishing trust and device integrity with the edge cloud 211, as will be described in further detail in connection with signalling diagrams of Figures 3 to 6.

In some embodiments, the device 201 may comprise a trusted platform module (TPM) (not shown in Figure 2). According to a general definition, a TPM is a hardware-based security module (or microchip) that is configured to provide a secure foundation for various security-related tasks on a computer or other digital devices (here, the device 201). The main purpose of a TPM is to establish and maintain the trustworthiness of a computing platform. The TPM may be integrated into a motherboard of a device 201 or it may be a separate hardware component of the device 201. In these embodiments, the trusted hardware 205 (comprising, e.g., a trusted processor and a trusted register) may be or form a part of a trusted platform module (TPM) and the trusted register may be a platform configuration register (PCR) of the trusted platform module (TPM). The RUM algorithm 202 may be configured to use TPM functions (e.g., Tpm_extend command).

The edge cloud 211 comprises a distributed network of computing resources (e.g., processors, memories etc.) and/or computing devices. According to the basic edge computing concept, the edge cloud 211 is located closer to the data source (i.e., the device 201) compared to the central cloud 221 which enables lower latency data processing and real-time decision-making.

In connection with embodiments, the edge cloud 211 comprises a monitoring function (MF) 212 for establishing trust with the device 201 and collecting results of resource usage measurements of the device 201 (i.e., telemetry data) in a trustworthy manner. The edge cloud 211 (or the monitoring function 212 thereof) may be configured to transmit the results of resource usage measurements of the device 201 further to the central cloud 221. The monitoring function 212 may be assumed to be a component which is trusted by the vendor of the device. A device sends, using the RUM algorithm 202, the data to the monitoring function at the edge. These functionalities are discussed in further detail below in connection with other Figures. The monitoring function 212 may be implemented using one or more (distributed) computing devices.

The edge cloud 211 further comprises, at least in some embodiments, a platform provider function (PPF) 213. The PPF 213 may be a manager/multi-stakeholder trusted entity. The PPF may be used, e.g., for verifying whether a cryptographic hash was generated correctly by the device 201 based on collected telemetry data. The PPF 213 may be implemented using one or more (distributed) computing devices.

The central cloud 221 comprises, similar to the edge cloud 211, a distributed network of computing resources (e.g., processors, memories etc.) and/or computing devices though the central cloud 221 is farther removed from the device 201 compared to the edge cloud 211. As mentioned above, the central cloud 221 may be configured to receive the results of resource usage measurements of the device 201 from the edge cloud 211. The central cloud 221 may implement a monitoring function (MF) 222 for maintaining data relating to the device 201 in longer term, e.g., until a service level agreement (SLA) is finalized. The monitoring function 222 may be assumed to be a trusted component. Said maintained data may comprise, for example, number of total resources used by the device 201 and historic resource health record of the device 201. The information is not permanent and will be maintained for a pre-defined time, during which a customer/player can dispute on the service provisioning. After this pre-defined time expires, the data may be deleted.

The central cloud 221 (or the monitoring function 222 thereof) may be configured to maintain the blockchain 231 comprising a plurality of blocks 232, 233 234. The blockchain 231 is assumed to contain at least information on a smart contract relating to the device 201. The smart contract may comprise one or more service level agreements (SLAs) associated with the device. Additionally, the smart contract may comprise a service delivery date, information on the device and/or one or more measurement metrics used by the device. As will be described below, the smart contract may also contain any confirmation receipts confirming establishment of trustworthiness of the device 201 and/or any (final) confirmation receipts confirming a completion or an end of a smart contract or a completion or an end of a particular service or SLA associated with the smart contract (and with the RUM algorithm of the device).

In the following, one concrete example of an SLA which may be stored in the blockchain is presented. Here, it is assumed that a given device is leased for 2 months and should be scanning 10 packets per minute. Accordingly, the SLA stored inside the blockchain as a smart contract (or as a part of a smart contract) may comprise the following information: lease duration (integer), packets per minute (integer) and device identifier (string). The SLA is considered breached if the device scans less than 10 packets per minute. In some cases, a cryptographic hash of the scanning software may also be included in the SLA in the blockchain. In such cases, the software is considered tempered or changed if a cryptographic hash received at the central cloud does not match the cryptographic hash of the blockchain.

In general, the blockchain 231 may comprise a plurality of such smart contracts relating to a respective plurality of devices. The smart contract may also comprise, for example, confirmation receipts generated upon establishing trust between the device 201 and the edge cloud 211, as will be described in further detail in connection with Figure 3. Blockchain will store original service level agreement between the participants.

It should be noted that software integrity may not be checked by the blockchain 231. Blockchain 231 may not provide any integrity checking mechanism inherently. Instead, the software integrity is enabled through attestation mechanisms provided by the device 201 (or the TPM thereof) and the edge cloud 211 (or other attestation entity such as a remote attestation server).

While Figure 2 shows only a single device 201 connected to a single edge cloud 211 which is further connected to a single central cloud 221 for simplicity of presentation, in practice, a plurality of devices 201, a plurality of edge clouds 211 and/or a plurality of central clouds 221 may be provided. Each of the plurality of edge clouds 211 may be connected to one or more devices 201. Each of the plurality of central clouds 221 may be connected to one or more edge clouds 211. The plurality of central clouds may be configured to manage the same blockchain 231 and/or separate blockchains.

Figure 3 illustrates signaling for establishing trust between a device (e.g., an IoT device) and an edge cloud according to embodiments. Figure 3 illustrates signaling between the device, the edge cloud, a central cloud and a blockchain. The device, the edge cloud, the central cloud and the blockchain of Figure 3 may correspond to the device 201, the edge cloud 211, the central cloud 221 and the blockchain 231 of Figure 2. The illustrated functionalities of the edge cloud may be carried out by one or more physical devices (e.g., servers). The illustrated functionalities of the edge cloud may be performed fully or at least in part by the (trusted) monitoring function 212 and/or the PPF 213 of Figure 2. The illustrated functionalities of the central cloud may be performed fully or at least in part by the (trusted) monitoring function 222 of Figure 2. The illustrated functionalities of the central cloud may be carried out by one or more physical devices (e.g., servers).

Initially, Figure 3 shows two alternatives (named alternative 1 & alternative 2) for retrieval of a resource usage monitoring (RUM) algorithm by the device. As described in connection with Figure 2, the RUM algorithm is an algorithm configured to enable the device the monitor its own resource usage (e.g., usage of one or more different pieces of hardware and/or one or more different pieces of software and/or operation of the device as a whole).

In alternative 1, it is assumed that the edge cloud (but not the device) is initially maintaining the RUM algorithm in a memory. The device retrieves (or downloads), in messages 301, the resource usage monitoring algorithm from the edge cloud. The RUM may retrieved or downloaded, e.g., from a server acting as a remote repository for software and forming a part of the edge cloud.

In some embodiments, the retrieving in messages 301 may comprise the following steps. The device may transmit a request for the RUM algorithm to the edge cloud. Following the reception of the request (or in response to the reception of the request), the edge cloud may transmit the RUM algorithm to the device.

In alternative 2, it is assumed that at least the central cloud is maintaining the RUM algorithm in a memory. Accordingly, the device retrieves (or downloads), in messages 302, the resource usage monitoring algorithm from the central cloud. Additionally, the edge cloud may also retrieve (or download), in block 303, the RUM algorithm from the central cloud (assuming that it does not already have the RUM algorithm).

In some embodiments, the retrieving in messages 302 may comprise the following steps. The device may transmit a request for the RUM algorithm to the central cloud. The request may be transmitted, e.g., via the edge cloud. Following the reception of the request (or in response to the reception of the request), the central cloud may transmit the RUM algorithm to the device (e.g., directly or via the edge cloud).

In some embodiments, the retrieving in messages 303 may comprise the following steps. The edge cloud may transmit a request for the RUM algorithm to the central cloud. Following the reception of the request (or in response to the reception of the request), the central cloud may transmit the RUM algorithm to the edge cloud.

In some embodiments, the device may receive, in messages 301 or message 302, in addition to the RUM algorithm itself, an identifier (or a code) for (uniquely) identifying a specific copy or instance of the RUM algorithm that was communicated to the device. The identifier may be (or serve as) a unique identifier for the copy or instance of the RUM algorithm specific to the device. Thus, the identifier may be used also for identifying the device itself. The identifier may be, e.g., a universally unique identifier (UUID), a seed code, or a magic number. This identifier may be used as input for a hashing algorithm in the smart contract on the blockchain. In alternative 2, the edge cloud may also receive, in messages 303, said identifier for identifying a specific copy or instance of the RUM algorithm provided to the device.

In some embodiments, the device may initially perform a measured boot and trigger the retrieving of the RUM algorithm (messages 301 or messages 302) in response detecting the measured boot. The measured boot may be detected using a TPM of the device. According to a general definition, a measured boot is a security-conscious startup process in which a computing device measures various components and/or configurations of a boot (i.e., start-up) process of a computing device and stores information regarding said measurements (e.g., to the TPM of the computing device). The measured boot serves to ensure integrity of the computing device and provide protection against unauthorized modifications or tampering. The measured boot process is commonly used, in TPM technology and secure boot procedures to establish and verify the trustworthiness of a computing platform during startup.

The device calculates, in block 304, a first cryptographic hash based on the RUM algorithm. Similarly, the edge cloud calculates, in block 305, a second cryptographic hash based on the RUM algorithm. In other words, the RUM algorithm is used as an input of a hashing function at the device and at the edge cloud. The calculation operations of blocks 304, 305 may be substantially the same. Thus, the first and second cryptographic hashes may be identical (assuming that nothing goes wrong in the processes of blocks 301 to 305).

The device stores, in block 306, the first cryptographic hash at least to a trusted register. The trusted register may form a part of a trusted processor of the device. The first cryptographic hash stored to the trusted register may be used to validate the RUM algorithm for integrity validation, as will described in the following.

In some embodiments, the trusted register may be a platform configuration register (PCR) of a TPM of the device. In such embodiments, the storing of the first cryptographic hash in block 306 may be performed using a TPM extend operation (or equally "tpm_extend" operation). According to a general definition, a TPM extend is an operation for extending a PCR of the TPM with a new value (here, the first cryptographic hash).

In some embodiments, the device may store the first cryptographic hash also to a memory of the device (i.e., to the internal storage 203 of Figure 2). The first cryptographic hash stored in the memory may be accessed in situations of dispute (i.e., cases where the edge cloud or the central cloud does not agree with the measurements).

In the following, one example of a dispute is discussed. If any of the participant do not agree with the measurements, a dispute occurs. The oracle service records through smart contract (or SLA) execution that dispute is occurred. Dispute clauses of the SLA/smart contract will then be executed. If the dispute clauses state that the receipts should be sent again in the specified SLA time, the smart contract will define to send this signal to the oracle service which wait for another set of receipts. Otherwise, the contract will close, and disputes are solved offline. Offline dispute resolution is out-of-scope for this work as it is case-to-case bases.

In some embodiments, the edge cloud may store the second cryptographic hash to a memory or to a register.

The device transmits, in message 307, the first cryptographic hash to the edge cloud (for performing integrity validation at the edge cloud). The edge cloud receives, in block 308, the first cryptographic hash from the device. Similarly, the edge cloud transmits, in message 309, the second cryptographic hash to the device, and the device receives, in block 310, the second cryptographic hash from the edge cloud. The transmissions 307, 309 may be carried out through a secure communication medium such as a private 5G network.

In some embodiments, the device may transmit the first cryptographic hash, additionally or alternatively, to the central cloud (for performing integrity validation at the central cloud).

In some embodiments, the device may also calculate one or more further cryptographic hashes based on one or more other pieces of software of the device (e.g., an OS and/or a BIOS). The device may store the one or more further cryptographic hashes to the trusted register (e.g., the PCR of the TPM). The device may transmit the one or more further cryptographic hashes to the edge cloud (e.g., in message 307). The edge cloud may store the one or more further cryptographic hashes to a memory of the edge cloud.

Both the edge cloud and the device compare, in blocks 311, 312, the first and second cryptographic hashes for validating integrity of the RUM algorithm which was communicated to the device. In other words, the device and the edge cloud determine, in blocks 311, 312, whether the first and second cryptographic hashes match each other.

In response to the first and second cryptographic hashes matching based on the comparing in block 311, the edge cloud transmits, in message 313, a confirmation receipt to the central cloud. Similarly, in response to the first and second cryptographic hashes matching based on the comparing in block 312, the device transmits, in message 314, a confirmation receipt to the central cloud (or, alternatively, to the edge cloud which may transmit it further to the central cloud). Each confirmation receipt serves to confirm the integrity of the RUM algorithm which was communicated to the device. In other words, based on the received confirmation receipts, any data collected using the RUM algorithm may be considered trustworthy.

In some embodiments, one or both of the confirmation receipts in messages 313, 314 may comprise at least information identifying a smart contract associated with the device. Additionally or alternatively, one or both of the confirmation receipts in messages 313, 314 may comprise information identifying the device. The one or both of the confirmation receipts 313, 314 may be signed.

In some embodiments, one or both of the confirmation receipts in messages 313, 314 may comprise all or at least one of the following fields: a device identifier, a device type (e.g., a drone), a smart contract identifier, a timestamp (e.g., a timestamp indicating current time at the time of transmission or generation of the confirmation receipt), an indication giving or denying permission for reading or a digital signature. It should be emphasized that the above listed fields referring to a device relate to the (IoT) device (e.g., a drone) and not any apparatus of the edge cloud. If the device is a drone, the confirmation receipt may further comprise a field indicating a duration of flight.

In some embodiments, each of the edge cloud and/or the device may transmit a negative receipt to the central cloud in response to the first and second cryptographic hashes failing to match. A dispute resolution process may be triggered by the central cloud in response to receiving a negative receipt. The central cloud may write information indicating the triggering of the dispute resolution process to the smart contract in the blockchain. The contents of the negative receipt may be similar as described above for the confirmation receipts.

The central cloud receives, in block 314, the confirmation receipts. Subsequently, the central cloud writes, in block 315, the confirmation receipts to a smart contract in the blockchain. Said smart contract may be a smart contract associated with the device (and optionally the edge cloud).

In some alternative embodiments (not depicted in Figure 3), the edge cloud may calculate the second cryptographic (block 305) following the reception of the first cryptographic hash (block 308).

In some alternative embodiments, the comparing of the first and second cryptographic hashes and the subsequent transmission of a confirmation receipt may be performed by only one of the device and the edge cloud. Thus, in some embodiments, elements 307, 308, 311, 313 or elements 305, 309, 310, 312, 314 may be omitted. In some embodiments, the comparing of the first and second cryptographic hashes and generation of a confirmation receipt may be carried out by the central cloud, in addition or alternative to the device and/or the edge cloud. In such embodiments, the first cryptographic hash may be transmitted to the central cloud, as described above.

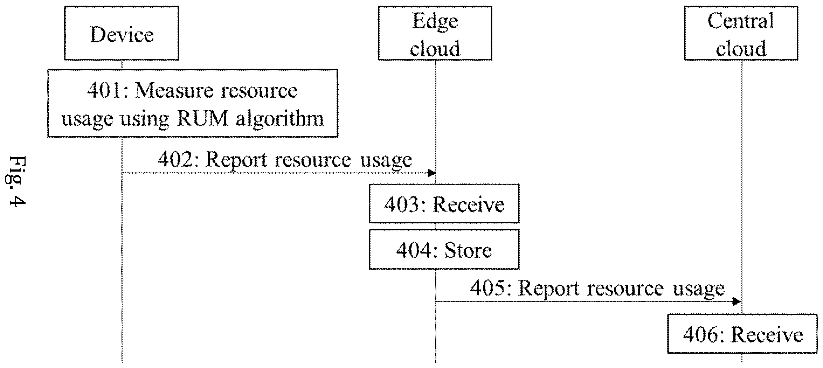

Figure 4 illustrates signaling for using the RUM algorithm for monitoring resource usage of a device (being, e.g., an IoT device) and reporting said resource usage. Figure 4 illustrates signaling between the device, the edge cloud and a central cloud. The device, the edge cloud and the central cloud of Figure 4 may correspond to the device 201, the edge cloud 211, the central cloud 221 and the blockchain 231 of Figure 2. The illustrated functionalities of the edge cloud may be carried out by one or more physical devices (e.g., servers). The illustrated functionalities of the central cloud may be carried out by one or more physical devices (e.g., servers). The illustrated functionalities of the edge cloud may be performed fully or at least in part by the (trusted) monitoring function 212 and/or the PPF 213 of Figure 2. The illustrated functionalities of the central cloud may be performed fully or at least in part by the (trusted) monitoring function 222 of Figure 2.

The process of Figure 4 may be carried out after the execution of the process of Figure 3, that is, after establishing trust between the device and the edge cloud. Thus, any of the definitions provided in connection with Figure 3 may apply, *mutatis mutandis,* also here.

The device performs in block 401, measurements of resource usage of the device using the RUM algorithm. In other words, the device collects telemetry data regarding its own resource usage. The measurements may be performed by retrieving data using native application programming interfaces (APIs) and protocols of the device.

The measurements may be performed separately for one or more resources of the device, where the one or more resources may comprise one or more software resources (e.g., applications) and/or one or more hardware resources (e.g., hardware modules or chips). Additionally or alternatively, the device may measure, in block 401, total resource usage of the device using the RUM algorithm.

The measurements of the resource usage may comprise at least measurements of usage time (or equally usage duration or running time) of the one or more resources. Said usage time $t_{usage}$ may be defined as

$$t_{\text{usage}} = t_{\text{now}} - t_{n-1} - t_{\text{idle}},$$

where $t_{n\_1}$ is the time corresponding to the previous time epoch, $t_{\text{now}}$ is the current time and $t_{\text{idle}}$ is the idle time. The measurements may be carried out periodically (e.g., once or multiple times per time epoch).

In some embodiments, the measurements of the resource usage may comprise at least measurements of battery level (or a change in the battery level) in general or battery level (or a change in the battery level) associated with the one or more resources.

The measurements of the resource usage may comprise also measurements of usage time (or equally usage duration or running time) of the device as a whole.

In some embodiments, the device may store results of the measurements to a memory of the device (e.g., to the internal storage 203 of Figure 2).

The device transmits, in message 402, to the edge cloud, a report comprising at least results of the measurements. This step may also be performed using the RUM algorithm. The report transmitted in block 402 may also comprise other telemetry data specific to the device and defined in the SLA of the device. The report may be transmitted to the edge cloud through a secure communication medium such as a private 5G network.

In some embodiments, the device may calculate a further cryptographic hash based on the first cryptographic hash, the results of the measurements of the resource usage of the device (acquired using the RUM algorithm), a location of the device and a timestamp (indicating, e.g., a time when the further cryptographic hash was created). In some alternative embodiments, the further cryptographic hash may depend on the first cryptographic hash and the results of the measurements of the resource usage of the device and optionally on the location of the device and/or the timestamp. Said further cryptographic hash may be included in the report transmitted in message 402. Said further cryptographic hash (i.e., "hash value") may be defined, for example, as follows:

hash value = hash(hash(RUM algorithm), usage, device, timestamp),

where "hash" is a hashing function, "RUM algorithm" is the code of the RUM algorithm maintained in the trusted hardware of the device, "hash(RUM algorithm)" is the first cryptographic hash, "usage" is a resource usage value (e.g., $t_{usage}$) or a set of resource usage values, "devloc" is the location of the device (acquired, e.g., using GPS) and "timestamp" is a timestamp indicating the current time at the time of creation of the further cryptographic hash.

In some embodiments, the report (i.e., message 402) may further comprise TPM metadata for enabling verification of an identity of the TPM of the device.

In some embodiments, the device may sign the report (i.e., message 402) or a part thereof (e.g., the TPM metadata), before it is transmitted, for ensuring validity of the results of the measurements. The signing may be performed using the TPM or using an external key derived from a certificate-chain backed by the TPM. The data included may contain a cryptographic hash or in the best case one or more full or partial TPM quote structures. Ideally, an "attestation key" derived from the TPM's "endorsement key" may be utilized though any TPM backed key is sufficient here. This may also include certificates based on external and TPM backed structures.

In some embodiments, the device may store results of the measurements and/or the further cryptographic hash to the trusted hardware (a trusted register such as the PCR of the TPM) of the device.

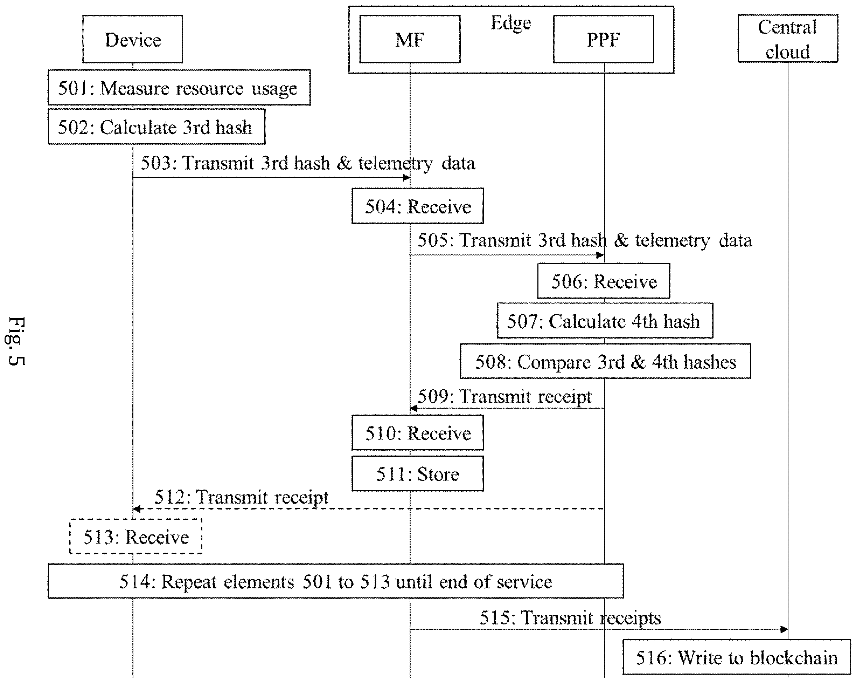

The edge cloud receives, in block 402, the report. Moreover, the edge cloud stores, in block 403, a receipt (or a confirmation receipt) to an immutable database. The receipt may be stored based on and/or in response to the received report. The immutable database may form a part of the edge cloud. The immutable database may be a database managed by multiple participants or stakeholders of the distributed monitoring system. As the name implies, the immutable database is immutable and thus cannot be changed. The receipt may comprise, e.g., all or at least one of: a timestamp, the further cryptographic hash (included in the received report), an identifier of the device or an identifier of the RUM algorithm used by the device. In some embodiments (e.g., where only a single RUM algorithm is employed), the identifier of the RUM algorithm used by the device may be omitted from the receipt. The edge cloud transmits (or forwards), in block 404, the report (or at least part a thereof) (and optionally also the receipt) to the central cloud. Steps of blocks 402, 403, 404 may be performed jointly by the MF and the PPF of the edge cloud, similar to as will be described in connection with Figure 5 in further detail. The central cloud receives, in block 405, the report (or at least a part thereof).

In some embodiments, the edge cloud (or specifically the PPF thereof) may repeat the calculation of the further cryptographic hash and compare the further cryptographic hashes calculated by the device and the edge cloud to validate its integrity. The storing of the receipt in block 404 (and possibly also the transmission of block 405) may performed only in response to the two further cryptographic hashes matching each other. In such embodiments, the receipt may be transmitted, in message 405, to the central cloud.

In some embodiments, a plurality of reports may be collected at the edge cloud before they are reported to the central cloud. In other words, actions pertaining to elements 401 to 404 may be carried out a plurality of times (e.g., periodically) after which actions pertaining to elements 405, 406 are carried out for reporting the collected resource usage data (i.e., a plurality of reports transmitted by the device).

The process of Figure 4 may be repeated regularly or periodically. In other words, the measurements of block 401 may be performed continuously during the operation of the device while the reporting of elements 402 to 406 (or at least element 402) may be repeated using a pre-defined schedule or a pre-defined period or time epoch (e.g., a period of three minutes). The storing of the further cryptographic hash at the device and the receipt (comprising the further cryptographic hash) at the edge cloud may be performed at least at the end of an associated service.

Figure 5 illustrates signaling for using the RUM algorithm for monitoring resource usage of a device (being, e.g., an IoT device) and reporting said resource usage. Figure 5 corresponds to one more detailed version of the process discussed above in connection with Figure 4. Figure 5 illustrates signaling between the device and the edge cloud where the edge cloud comprise at least a (trusted) monitoring function (MF) such as a monitoring function 212 of Figure 2 and a platform provider function (PPF) which is a neutral component. The device and the edge cloud of Figure 5 may correspond to the device 201 and the edge cloud 211 of Figure 2. The illustrated functionalities of the edge cloud may be carried out by one or more physical devices (e.g., servers). The functionalities of the PPF and MF of the edge cloud may, in some embodiments, be carried out using two separate or disjoint sets of one or more physical devices. The illustrated functionalities of the central cloud may be carried out by one or more physical devices (e.g., servers). The illustrated functionalities of the edge cloud and the central cloud may be performed fully or at least in part by the (trusted) monitoring functions 212, 222 of Figure 2, respectively. Dashed lines are used in Figure 5 for indicating optional features.

Referring to Figure 5, the device performs, in block 501, measurements of resource usage of the device using the RUM algorithm. In other words, the device collects telemetry data regarding its own resource usage. Block 501 may correspond fully to block 401 of Figure 4.

Then, the device calculates, in block 502, a third cryptographic hash based at least on results of the measurements performed in block 501, that is, on a resource usage data (or equally telemetry data) collected using the RUM algorithm in block 501. The device may store the third cryptographic hash to trusted hardware (e.g., a trusted register such as the PCR of the TPM) of the device. The third cryptographic hash may correspond to the further cryptographic hash as discussed in connection with Figure 4. Thus, any of the features discussed in connection with the further cryptographic hash may apply also here. For example, the device may calculate also the third cryptographic hash more specifically based on the first cryptographic hash, the results of the measurements of the resource usage of the device (acquired using the RUM algorithm), a location of the device and a timestamp (indicating, e.g., a time when the third cryptographic hash was created).

In some embodiments, the device may also store results of the measurements and/or the third cryptographic hash to the trusted register in block 503.

The device transmits, in message 503, to the edge cloud, a report (or a message) comprising at least the results of the measurements (obtained in block 501) and the third cryptographic hash. This step may also be performed using the RUM algorithm. The report transmitted in message 503 may also comprise other telemetry data specific to the device and defined in the SLA of the device. The report may be transmitted to the edge cloud through a secure communication medium such as a private 5G network.

Upon receiving the report in block 504, the monitoring function of the edge cloud transmits (or forwards), in message 505, the report (or at least the third cryptographic hash and the collected resource usage data contained therein) to the PPF of the edge cloud. The PPF of the edge cloud receives, in block 506, the third cryptographic hash and the collected resource usage data.

In some embodiments, the device may remove the collected resource usage data (i.e., results of the measurements) of the device from the memory of the device following the transmission of message 503. This may be done simply in order to free up storage space which may be relatively limited in many IoT devices.

The PPF calculates, in block 507, a fourth cryptographic hash based on the received resource usage data (i.e., results of the measurements) collected by the device using the RUM algorithm. Ideally (if nothing has gone wrong), the third and fourth cryptographic hashes should be the same.

The PPF of the edge cloud compares, in block 508, the third and fourth cryptographic hashes for integrity validation. In response to the third and fourth cryptographic hashes matching at the PPF of the edge cloud, the PPF of the edge cloud (generates and) transmits, in messages 509, a confirmation receipt to the monitoring function of the edge cloud. The confirmation receipt may comprise, e.g., all or at least one of: a timestamp, the third cryptographic hash (or equally the fourth cryptographic hash), an identifier of the device or an identifier of the RUM algorithm used by the device. In some embodiments (e.g., where only a single RUM algorithm is employed), the identifier of the RUM algorithm used by the device may be omitted from the confirmation receipt.

In some embodiments, the confirmation receipt will be generated and transmitted only in response to collecting, by the PPF, consensus from a plurality of the stakeholders (of the distributed monitoring system).

The confirmation receipt is received, in block 510, by the monitoring function of the edge cloud. The monitoring function stores, in block 511, the confirmation receipt to an immutable database. The immutable database may form a part of the edge cloud. The immutable database may be a database managed by multiple participants or stakeholders of the distributed monitoring system. As the name implies, the immutable database is immutable and thus cannot be changed. It should be noted that the collected resource usage data of the device may not be stored to the immutable database for ensuring data privacy.

The PPF of the edge server may also transmit, in message 512, the confirmation receipt to the device itself. The device receives in block 513. The device may store the confirmation receipt to a memory (e.g., to an internal storage 203 of Figure 2).

In some embodiments, either the MF or the PPF of the edge cloud may transmit the report received from the device (or a part thereof) to the central cloud, similar to as described in connection with Figure 4 (not shown in Figure 5).

The process described in connection with elements 501 to 513 (or at least elements 501 to 511) is then repeated one or more times (or, more generally, zero or more times). Specifically, said process may be repeated until a service associated with the RUM algorithm expires or ends. The repetition may be periodic. The end of the service may correspond to a completion of a smart contract or an associated service or SLA.

Following the end of the service, the monitoring function of the edge cloud transmits, in message 515, the stored confirmation receipts (i.e., receipts stored in block 511 to the immutable database) relating to the collected resource usage data to the central cloud. The central cloud receives, in block 516, the confirmation receipts and writes, in block 517, the confirmation receipts to a smart contract in a blockchain. Said smart contract may be a smart contract associated with the device (and optionally the edge cloud).

In some embodiments, the MF of the edge cloud may transmit the reports received from the device (or at least certain parts thereof) to the central cloud following the end of the service (instead of reporting them one-by-one as they are received at the edge cloud).

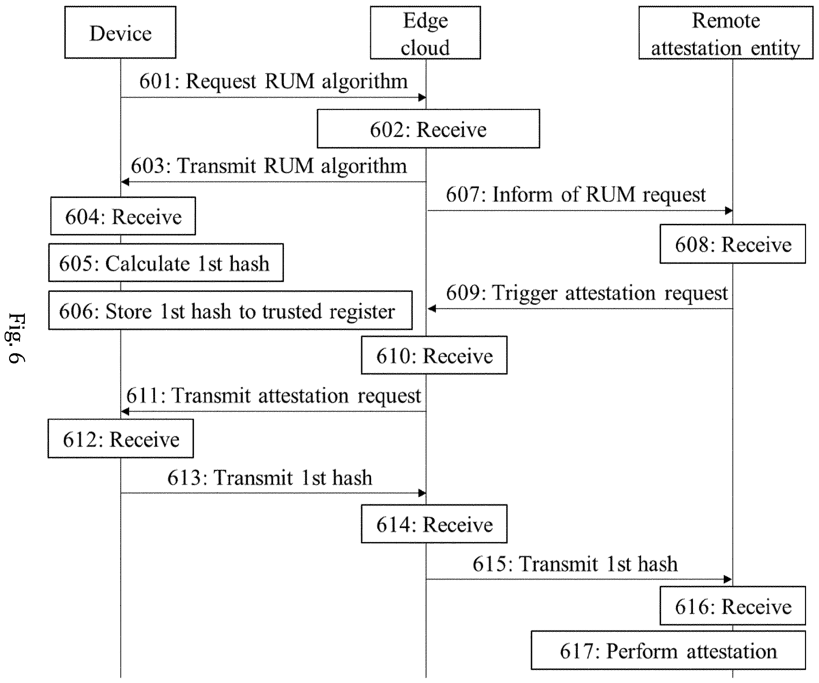

Figure 6 illustrates alternative signaling for establishing trust between a device (e.g., an IoT device) and an edge cloud according to embodiments. Figure 6 illustrates signaling between the device, the edge cloud and a remote attestation entity (being, e.g., a remote attestation server). The remote attestation entity may be located in the edge cloud or in the central cloud, depending, e.g., on the parties who are responsible for maintaining device integrity. The device and the edge cloud of Figure 6 may correspond, respectively, to the device 201 and the edge cloud 211 of Figure 2. The remote attestation entity (or server) may form a part of the central cloud discussed in connection above embodiments or be separate from it. The illustrated functionalities of the edge cloud may be carried out by one or more physical devices (e.g., servers).

Referring to Figure 6, the device transmits, in message 601, a request for an RUM algorithm to the edge cloud. The transmission of message 601 may be triggered, e.g., by a TPM installed to the device recognizing a measured boot of the device. The request may be directed specifically to a server acting as a remote repository for software. The request is received, in block 602, by the edge cloud.

The edge cloud (or said server acting as the remote repository for software) transmits, in message 603, the RUM algorithm to the device. The device receives, in block 604, the RUM algorithm.

The device calculates, in block 605, a first cryptographic hash based on the RUM algorithm, that is, the RUM algorithm is used as an input of a hashing function at the device.

The device store, in block 606, the RUM algorithm to trusted hardware (e.g., a trusted register such as the PCR of the TPM) and optionally to at least one memory. The device may, for example, perform a TPM extend operation and thus add the first cryptographic hash to the PCR of the TPM of the device.

The edge cloud transmits, to the remote attestation entity, a message 607 to inform the remote attestation entity of the request of the RUM algorithm transmitted by the device. The remote attestation entity receives, in block 608, said message. In response to or following reception in block 608, the remote attestation entity triggers, via message 609, transmission of an attestation request. Accordingly, in response to receiving the message 609 in block 610, the edge cloud transmits, in message 611, an attestation request to the device. The attestation request may request the device to transmit the first cryptographic hash to the remote attestation entity.

Following the transmitting of the first cryptographic hash, the device may start transmitting RUM-related data (e.g., telemetry data). As described in connection with previous embodiments, the device may request its TPM to also transmit metadata. Additionally or alternatively, the device may transmit the data with the TPM metadata to verify the data is indeed from the actual device TPM. Some of the proof (e.g., the data + metadata) may be signed by the TPM to ensure validity of the data.

The device receives, in block 612, the attestation request. In response to or following the reception in block 612, the device transmits, in message 613, the first cryptographic hash to the edge cloud.

In response to or following receiving the first cryptographic hash in block 614, the edge cloud transmits, in message 615, the first cryptographic hash to the remote attestation entity.

The remote attestation entity receives, in block 616, the first cryptographic hash. Thereafter, the remote attestation entity performs, in block 617, attestation based on the first cryptographic hash. The remote attestation entity may not directly manage a blockchain like was described above for the central cloud though it may be able to access the blockchain, e.g., for retrieving cryptographic hashes generated by different (IoT) devices based on their respective copies of the RUM algorithm. Nevertheless, the remote attestation may maintain its own record of the cryptographic hashes associated with the devices (that is, it may not rely on constantly accessing the blockchain for retrieving the cryptographic hashes).

The embodiments discussed above provide at least some of the following technical advantages. The embodiments enable usage based resource monitoring of devices in a decentralized manner. One of the application areas may be considered the so-called Industry 4.0 space, which is expected mainly to become a service based architecture (e.g., hardware-as-a-service). In a service based architecture, resources such as drones and robots will be provided by several providers (or vendors). Moreover, components within a device (e.g., drones) may be supplied by several parties. In such a heterogeneous environment, keeping track of the device performance, for the purposes such as quality monitoring and usage, is important. Embodiments enable trustable and accountable usage monitoring for a heterogeneous environment. Furthermore, the embodiments enable identifying whether a given service provided to users is as per the agreed SLA. The current SLA typically do not provide trustless mechanism to enable such use cases.

The blocks, related functions, and information exchanges described above by means of Figures 2 to 6 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

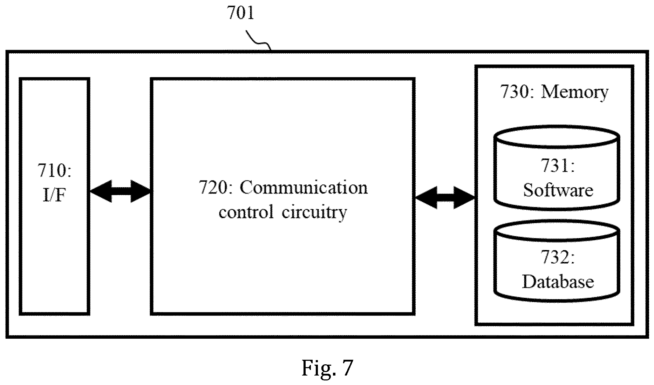

Figure 7 provides an apparatus 701 according to some embodiments. Specifically, Figure 7 may illustrate a device (e.g., an IoT device), a part of the device (e.g., a computing device), an edge cloud, a part of the edge cloud (e.g., one or more devices implementing the monitoring function and/or the platform provider function), a central cloud or a part of the central cloud (e.g., one or more devices implementing the monitoring function).

The apparatus 701 may comprise one or more communication control circuitry 720, such as at least one processor, and at least one memory 730, including one or more algorithms 731 (instructions), such as a computer program code (software) wherein the at least one memory and the computer program code (software) are configured, with the at least one processor, to cause the apparatus 701 to carry out any one of the exemplified functionalities of the apparatus (being, e.g., the (IoT) device, the edge cloud, the MF of the edge cloud, the PPF of the edge cloud, the central cloud or the MF of the central cloud) described above. Said at least one memory 730 may also comprise at least one database 732.

When the one or more communication control circuitry 720 comprises more than one processor, the apparatus 701 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more communication control circuitry 720 may comprise at least one Qualcomm Snapdragon and/or Intel Atom processor. The one or more communication control circuitry 720 may comprise at least one application-specific integrated circuit (ASIC). The one or more control circuitry 720 may comprise at least one field-programmable gate array (FPGA).

Referring to Figure 7, the one or more communication control circuitry 720 of the apparatus 701 are configured to carry out functionalities of any entity (e.g., the device, the edge cloud or the central cloud) described above by means of any of Figures 3 to 6 using one or more individual circuitries. It is also feasible to use specific integrated circuits, such as ASIC (Application Specific Integrated Circuit) or other components and devices for implementing the functionalities in accordance with different embodiments.

Referring to Figure 7, the apparatus 701 may further comprise different interfaces 710 such as one or more communication interfaces comprising hardware and/or software for realizing communication connectivity according to one or more communication protocols. If the apparatus 701 is the device (e.g., an IoT device), the one or more communication interfaces 710 may comprise communication interfaces between the device 701 and at least one edge cloud and/or between the apparatus 701 and at least one central cloud (possibly via the at least one edge cloud). If the apparatus 701 is the edge cloud, the one or more communication interfaces 710 may comprise communication interfaces between the edge cloud 701 and at least one (IoT) device and/or between the edge cloud 701 and at least one central cloud. If the apparatus 701 is the central cloud, the one or more communication interfaces 710 may comprise communication interfaces between the central cloud 701 and at least one (IoT) device and/or between the central cloud 701 and at least one edge cloud.

The one or more communication interfaces 710 may comprise standard well-known components such as an amplifier, filter, frequency-converter, (de)modulator, and encoder/decoder circuitries, controlled by the corresponding controlling units, and one or more antennas. The apparatus 701 may also comprise one or more user interfaces.

Referring to Figure 7, the memory 730 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software-/firmware and (ii) any portions of hardware processor(s) with software, including digital signal processor(s), software, and memory(ies) that work together to cause an apparatus, such as an IoT device, a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hard-ware circuit or processor (or multiple processors) or a portion of a hardware circuit or processor and its (or their) accompanying software and/or firmware.

In an embodiment, at least some of the processes described in connection with Figures 3 to 6 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations according to any one of the embodiments of Figures 3 to 6 or operations thereof. In some embodiments, at least some of the processes may be implemented using discrete components.

According to an embodiment, there is provided an apparatus (e.g., a device or an IoT device) comprising means for performing:

retrieving a resource usage monitoring algorithm from an edge cloud or a central cloud;
calculating a first cryptographic hash based on the resource usage monitoring algorithm;
storing the first cryptographic hash to a trusted register; and
transmitting the first cryptographic hash to the edge cloud or to the central cloud.

According to an embodiment, there is provided an apparatus (e.g., an edge cloud, an edge server or an edge server system) comprising means for performing:

transmitting a resource usage monitoring algorithm to an Internet of Things, IoT, device;
calculating a second cryptographic hash based on the resource usage monitoring algorithm;
receiving a first cryptographic hash from the IoT device, wherein the first cryptographic hash has been calculated at the IoT device based on the resource usage monitoring algorithm;
comparing the first and second cryptographic hashes for integrity validation; and
in response to the first and second cryptographic hashes matching, transmitting a confirmation receipt to a central cloud for writing the confirmation receipt to a smart contract associated with the IoT device on a blockchain.

According to an embodiment, there is provided an apparatus (e.g., a central cloud, a central cloud server or a central cloud server system) comprising means for performing:

Embodiments as described may also be carried out, fully or at least in part, in the form of a computer process defined by a computer program or portions thereof. Embodiments of the methods described in connection with Figures 3 to 6 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present solution. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present solution may be referred to herein along with alternatives for the various components thereof. It is understood that such embodiments, examples, and alternatives are not to be construed as de facto equivalents of one another, but are to be considered as separate and autonomous representations of the present solution.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

INDUSTRIAL APPLICABILITY

At least some embodiments find industrial application in wireless communications.

**Claims**

1.   An apparatus comprising:

    at least one processor; and

    at least one memory storing instructions that, when executed by the at least one processor, cause the apparatus at least to perform:

        retrieving a resource usage monitoring algorithm from an edge cloud or a central cloud;
        calculating a first cryptographic hash based on the resource usage monitoring algorithm;
        storing the first cryptographic hash to a trusted register; and
        transmitting the first cryptographic hash to the edge cloud or the central cloud.

2.   The apparatus of claim 1, wherein the at least one memory and the instructions are configured, with the at least one processor, to cause the apparatus to perform:

        performing, using the resource usage monitoring algorithm, measurements of resource usage of the apparatus; and
        transmitting, using the resource usage monitoring algorithm, a report comprising at least results of the measurements of the resource usage of the apparatus to the edge cloud.

3.   The apparatus of claim 2, wherein the performing of the measurements of the resource usage comprises performing measurements of resource usage separately for one or more resources of the apparatus, the one or more resources comprising one or more software resources and/or one or more hardware resources.

4.   The apparatus of claim 2 or 3, wherein the at least one memory and the instructions are configured, with the at least one processor, to cause the apparatus to perform:

        calculating a further cryptographic hash based on the first cryptographic hash, the results of the measurements of the resource usage of the apparatus, a location of the apparatus and a timestamp; and
        including the further cryptographic hash in the report; and/or
        storing results of the measurements and/or the further cryptographic hash to the trusted register.

5.   The apparatus of claim 4, wherein the at least one memory and the instructions are configured, with the at least one processor, to cause the apparatus to perform the measurements, the calculating of the further cryptographic hash, at least one of the including of the further cryptographic hash in the report or the storing of the results of the measurements and/or the further cryptographic hash to the trusted register and the transmitting of the report periodically.

6. The apparatus according to any preceding claim, wherein the apparatus comprises a trusted platform module, TPM, and the trusted register is a platform configuration register, PCR, of the TPM.

7. The apparatus of claim 6, wherein the at least one memory and the instructions are configured, with the at least one processor, to cause the apparatus to perform:

    performing a measured boot; and
    triggering the retrieving of the resource usage monitoring algorithm in response detecting the measured boot using the TPM.

8. The apparatus according to any of claims 6 to 7, wherein the at least one memory and the instructions are configured, with the at least one processor, to cause the apparatus to perform, using the resource usage monitoring algorithm:

    performing measurements of resource usage of the apparatus; and
    transmitting, to the edge cloud, a report comprising at least results of the measurements and TPM metadata for enabling verification of an identity of the TPM of the apparatus.

9. The apparatus of claim 8, wherein the at least one memory and the instructions are configured, with the at least one processor, to cause the apparatus to perform, using the resource usage monitoring algorithm:
    signing the report or a part thereof before transmission using the TPM or an external key derived from a certificate-chain backed by the TPM for ensuring validity of the results.

10. The apparatus according to any preceding claim, wherein the at least one memory and the instructions are configured, with the at least one processor, to cause the apparatus to perform:

    receiving a second cryptographic hash from the edge cloud or the central cloud, wherein the second cryptographic hash has been generated at the edge cloud or the central cloud based on the resource usage monitoring algorithm;
    comparing the first and second cryptographic hashes for integrity validation; and
    in response to the first and second cryptographic hashes matching, transmitting a confirmation receipt to the edge cloud or the central cloud for writing the confirmation receipt to a smart contract associated with the apparatus on a blockchain.

11. The apparatus according to any preceding claim, wherein a retrieved copy of the resource usage monitoring algorithm comprises an identifier uniquely identifying the retrieved copy of the resource usage monitoring algorithm.

12. The apparatus according to any preceding claim, wherein the apparatus is an Internet of Things, IoT, device.

13. A method comprising:

    retrieving a resource usage monitoring algorithm from an edge cloud or a central cloud;
    calculating a first cryptographic hash based on the resource usage monitoring algorithm;
    storing the first cryptographic hash to a trusted register; and
    transmitting the first cryptographic hash to the edge cloud or the central cloud.

14. A non-transitory computer readable medium having stored thereon instructions that, when executed by a computing device, cause the computing device to perform:

    retrieving a resource usage monitoring algorithm from an edge cloud or a central cloud;
    calculating a first cryptographic hash based on the resource usage monitoring algorithm;
    storing the first cryptographic hash to a trusted register; and
    transmitting the first cryptographic hash to the edge cloud or the central cloud.

Fig. 1

Fig. 2

Fig. 3

Fig. 4

Fig. 5

**Device** | **Edge** (**MF**, **PPF**) | **Central cloud**

501: Measure resource usage

502: Calculate 3rd hash

503: Transmit 3rd hash & telemetry data

504: Receive

505: Transmit 3rd hash & telemetry data

506: Receive

507: Calculate 4th hash

508: Compare 3rd & 4th hashes

509: Transmit receipt

510: Receive

511: Store

512: Transmit receipt

513: Receive

514: Repeat elements 501 to 513 until end of service

515: Transmit receipts

516: Write to blockchain

EP 4 564 205 A1

20

Fig. 6

701

```
+------------------------------------------------------------------+
|                                                                  |
| +--------+   +---------------------------+   +------------------+ |
| |        |   |                           |   | 730: Memory      | |
| |        |   |                           |   |                  | |
| |        |   |                           |   |  +------------+  | |
| | 710:   |<->|  720: Communication       |<->|  |   731:     |  | |
| | I/F    |   |  control circuitry        |   |  |  Software  |  | |
| |        |   |                           |   |  +------------+  | |
| |        |   |                           |   |                  | |
| |        |   |                           |   |  +------------+  | |
| |        |   |                           |   |  |   732:     |  | |
| |        |   |                           |   |  |  Database  |  | |
| +--------+   +---------------------------+   |  +------------+  | |
|                                              +------------------+ |
+------------------------------------------------------------------+
```

Fig. 7

**EP 4 564 205 A1**

Europäisches Patentamt
European Patent Office
Office européen des brevets

# EUROPEAN SEARCH REPORT

**Application Number**

EP 24 21 6022

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/100342 A1 (SMITH ROSE M [US] ET AL) 30 March 2023 (2023-03-30) <br> * paragraph [0147] - paragraph [0201] * <br> * paragraph [0235] - paragraph [0296] * <br> * paragraph [0373] - paragraph [0390] * <br> * paragraph [0422] - paragraph [0434] * <br> * figures 39, 62 * <br> - - - - - | 1-14 | INV. <br> G06F21/51 <br> H04L9/32 <br> H04L9/00 <br><br> ADD. <br> H04L9/08 |
| A | US 2019/109874 A1 (SAMUEL ARJMAND M [US] ET AL) 11 April 2019 (2019-04-11) <br> * figures 6,8-10 * <br> * paragraph [0027] - paragraph [0028] * <br> * paragraph [0057] - paragraph [0095] * <br> * paragraph [0106] * <br> - - - - - | 1-14 | |
| A | US 2019/303623 A1 (REDDY ASHOK [US] ET AL) 3 October 2019 (2019-10-03) <br> * paragraph [0059] - paragraph [0079] * <br> * paragraph [0178] - paragraph [0179] * <br> * figure 16 * <br> - - - - - | 1-14 | |
| A | CN 110 024 422 B (INTEL CORP) 18 July 2023 (2023-07-18) <br> * the whole document * <br> - - - - - | 1-14 | **TECHNICAL FIELDS SEARCHED (IPC)** <br><br> G06F <br> H04L |

The present search report has been drawn up for all claims

| Place of search | Date of completion of the search | Examiner |
|---|---|---|
| Munich | 5 March 2025 | Dang, Hoai |

EPO FORM 1503 03.82 (P04C01)

## ANNEX TO THE EUROPEAN SEARCH REPORT
## ON EUROPEAN PATENT APPLICATION NO.

EP 24 21 6022

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document<br>cited in search report | Publication<br>date | Patent family<br>member(s) | Publication<br>date |
|---|---|---|---|
| US 2023100342 A1 | 30-03-2023 | US 2019373472 A1<br>US 2023100342 A1 | 05-12-2019<br>30-03-2023 |
| US 2019109874 A1 | 11-04-2019 | CN 111201530 A<br>EP 3695335 A1<br>EP 3695336 A1<br>US 2019109874 A1<br>US 2019109877 A1<br>WO 2019074575 A1<br>WO 2019074576 A1 | 26-05-2020<br>19-08-2020<br>19-08-2020<br>11-04-2019<br>11-04-2019<br>18-04-2019<br>18-04-2019 |
| US 2019303623 A1 | 03-10-2019 | NONE | |
| CN 110024422 B | 18-07-2023 | CN 110024330 A<br>CN 110024352 A<br>CN 110024422 A<br>CN 110050474 A<br>CN 113765715 A<br>DE 112017006701 T5<br>EP 3563521 A1<br>EP 3563545 A2<br>EP 3563546 A1<br>EP 3563596 A1<br>EP 3639536 A2<br>EP 3934203 A1<br>JP 7205994 B2<br>JP 7571353 B2<br>JP 2020503784 A<br>JP 2023052135 A<br>KR 20190100177 A<br>TW 201835784 A<br>TW 202307686 A<br>US 2019349190 A1<br>US 2019349254 A1<br>US 2019349261 A1<br>US 2019349426 A1<br>US 2019349433 A1<br>US 2019349733 A1<br>US 2021126826 A1<br>US 2022200851 A1<br>US 2022255796 A1<br>US 2022286354 A1<br>US 2022294690 A1<br>US 2022303181 A1<br>US 2023110131 A1<br>US 2024205080 A1 | 16-07-2019<br>16-07-2019<br>16-07-2019<br>23-07-2019<br>07-12-2021<br>19-09-2019<br>06-11-2019<br>06-11-2019<br>06-11-2019<br>06-11-2019<br>22-04-2020<br>05-01-2022<br>17-01-2023<br>23-10-2024<br>30-01-2020<br>11-04-2023<br>28-08-2019<br>01-10-2018<br>16-02-2023<br>14-11-2019<br>14-11-2019<br>14-11-2019<br>14-11-2019<br>14-11-2019<br>14-11-2019<br>29-04-2021<br>23-06-2022<br>11-08-2022<br>08-09-2022<br>15-09-2022<br>22-09-2022<br>13-04-2023<br>20-06-2024 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 24 21 6022

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2025

| Patent document cited in search report | Publication date | Patent family member(s) | | Publication date |
|---|---|---|---|---|
| | | US | 2024235931 A1 | 11-07-2024 |
| | | US | 2025039041 A1 | 30-01-2025 |
| | | WO | 2018125989 A2 | 05-07-2018 |
| | | WO | 2018126029 A2 | 05-07-2018 |
| | | WO | 2018126065 A1 | 05-07-2018 |
| | | WO | 2018126075 A1 | 05-07-2018 |
| | | WO | 2018126076 A1 | 05-07-2018 |
| | | WO | 2018126077 A1 | 05-07-2018 |

EPO FORM P0459

For more details about this annex : see Official Journal of the European Patent Office, No. 12/82

page 2 of 2